(19) **Europäisches Patentamt**

**European Patent Office**

**Office européen des brevets**

(11) **EP 1 530 708 B1**

(12) **EUROPEAN PATENT SPECIFICATION**

(45) Date of publication and mention
of the grant of the patent:
**17.05.2006 Bulletin 2006/20**

(51) Int Cl.:
*G01L 1/22* (2006.01)    *G01L 1/18* (2006.01)

(21) Application number: **03777566.5**

(22) Date of filing: **09.10.2003**

(86) International application number:
**PCT/US2003/032105**

(87) International publication number:
**WO 2004/074800 (02.09.2004 Gazette 2004/36)**

(54) **STRAIN GAGE**

DEHNUNGSMESSER

JAUGE DE CONTRAINTES

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **19.02.2003 US 368922**

(43) Date of publication of application:
**18.05.2005 Bulletin 2005/20**

(73) Proprietor: **Vishay Measurements Group, Inc.
Raleigh, NC 27611 (US)**

(72) Inventors:
• **KIEFFER, Thomas P.,
Malvern, PA 19355-2120 (US)**
• **WATSON, Robert B.,
Malvern, PA 19355-2120 (US)**
• **KARCHER HARRIS, Sharon L.,
Malvern, PA 19355-2120 (US)**

(74) Representative: **Thomson, Paul Anthony
Potts, Kerr & Co.
15, Hamilton Square
Birkenhead
Merseyside CH41 6BR (GB)**

(56) References cited:
EP-A- 1 197 737       GB-A- 2 360 361
US-A- 4 310 823       US-A- 5 328 551
US-A- 5 508 676       US-A- 5 780 746

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

BACKGROUND OF THE INVENTION

The present invention relates to strain gages. A strain gage is a strain sensitive resistive device used to measure mechanical strain. A strain gage is typically adhesively bonded to a surface and then measured changes in the resistance of the strain gage are associated with various effects depending upon the configuration of the strain gage. Strain gages can be used to measure bending, axial and torsional load or other strain effects. A strain gage, as the one disclosed in US 5 328 551, is made of a resistive foil which is typically photoetched, ion milled, or otherwise cut to form a pattern to produce a resistance. Foil material is usually a Ni-Cu or Ni-Cr or Manganese alloy of 50 microinches to 200 microinches in thickness. A typical resistance value associated with a strain gage is 120 ohms. The foil pattern is usually bonded to a very thin flexible polymer backing with an epoxy or similar resin or other cement. The polymer backing is thin (0.5 mils) to enhance flexibility. Such a device is strain sensitive according to the formula:

$$k_r \frac{dl}{l} = \frac{dr}{r},$$ where $\frac{dl}{l}$ is strain imposed on the gage when it is cemented to a structure under load (stress), $\frac{dr}{r}$ is the relative resistance change due to the strain, and k is a constant. The constant k of the strain gage is the proportionality factor between the relative change of the resistance and strain in the gage. Sometimes k is called the gage factor. The constant k is typically approximately 2.

Since the strain gage is very flexible, it can be applied to curved surfaces of very small radius. Because the gage is very flexible and "sticky" from static charge, it presents certain severe disadvantages.

One problem with prior art strain gages relates to the manufacturing process. A strain gage cannot be automatically sorted in vibrating bowls for packaging on a tape. Instead, strain gages are packaged individually in tray pockets or plastic folders, resulting in cumbersome and costly handling requirements.

A further problem is that such a prior art strain gage is fragile during handling by hand or machine.

Yet another problem is that strain gages are difficult to install. Strain gages are cemented to the structure for which strain is measured. Electrical lead attachments must be made and generally such handling requirements create inconvenience and cost. Therefore, it is a primary object of the present invention to improve upon the state of the art.

It is another object of the present invention to provide a strain gage that can be automatically sorted and packaged on a tape.

Yet another object of the present invention is to provide a strain gage that need not be individually packaged.

A further object of the present invention is to provide a strain gage that is robust and easier to handle.

A still further object of the present invention is to provide a strain gage that is conducive to easy installation.

One or more of these and/or other objects, features, or advantages of the present invention will become apparent from the description and claims that follow.

SUMMARY OF THE INVENTION

The present invention provides for a strain gage that is simpler to manufacture, handle and install. The strain gage includes a semi-rigid substrate having a thickness of about 1 to about 30 mils, a resistive strain sensitive foil bonded to the semi-rigid substrate, and a first and a second terminal operatively connected to the resistive foil. The strain gage can be used on flat or slightly curved surfaces. Because a semi-rigid substrate is used, the strain gage is easier to handle and to install.

The strain gage can include an anti-static layer attached to a surface of the semi-rigid substrate which further makes the strain gage conducive to handling. The anti-static layer also facilitates soldering the strain gage to a metal part.

According to another aspect of the present invention, a method of manufacturing strain gages is provided. The method includes bonding a resistive strain sensitive foil to a semi-rigid substrate, the resistive foil and semi-rigid substrate being selected to provide a gage factor equivalent to that of a prior art strain gage employing the same resistance foil (typically about 2), and attaching a first and second terminal to the resistive strain sensitive foil. An anti-static layer can also be attached to a surface of the resistive strain sensitive foil.

BRIEF DESCRIPTION OF THE DRAWINGS

Figure 1 is a front view of a strain gage according to one embodiment of the invention.
Figure 2 is a side view of a strain gage according to one embodiment of the invention.

DETAILED DESCRIPTION OF THE INVENTION

The present invention relates to strain gages. In particular, the present invention relates to providing a strain gage that is semi-rigid and not flexible in order to avoid the disadvantages of the prior art. The strain gage of the present invention is suitable for use on flat or slightly curved surfaces and provides advantages in ease of manufacturing and installation.

The strain gage includes the same type of serpentine resistive foil pattern associated with prior art strain gages, but the foil pattern is bonded to a semi-rigid substrate made of fiberglass, or polyimide resin, or other stiff material of about 1 mil to about 30 mils in thickness. The sensitivity of the resistor to strain, k, remains the same despite the thickness and rigidity of the device.

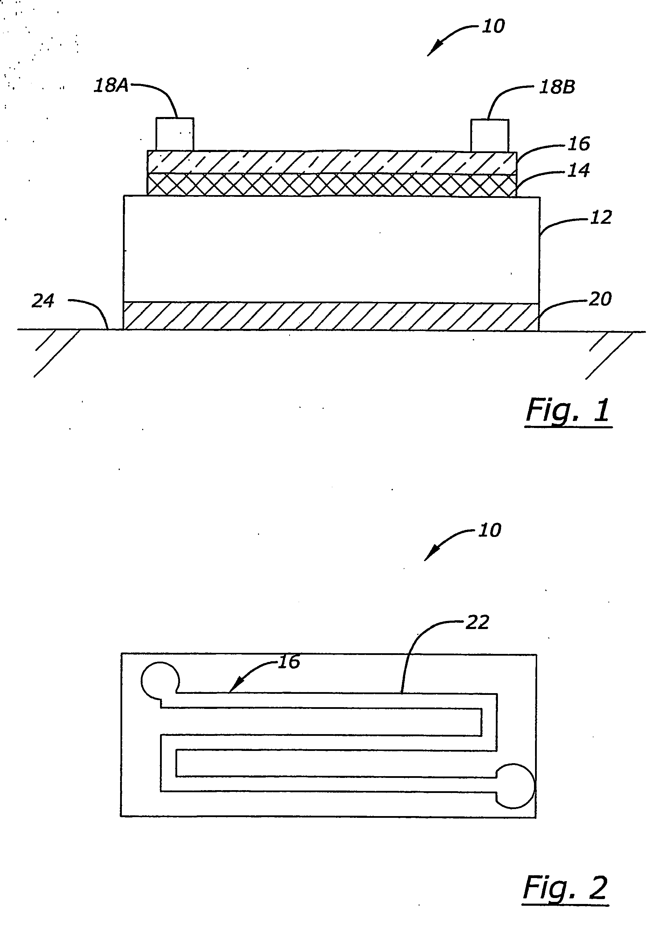

As shown in Figure 1, a strain gage 10 includes a substrate 12. The substrate 12 is a semi-rigid substrate as opposed to being a flexible substrate of the prior art. The present invention contemplates that various materials can be used, including fiberglass, plastic, glass, reinforced epoxy, polyimide or other stiff or semi-rigid material. The thickness of the substrate is about 1 to about 30 mils. The thickness of the substrate is therefore sufficiently great that the substrate remains semi-rigid. Bonded to the semi-rigid substrate 12 is a resistive strain sensitive foil 16. Various types of bonding agents, cements, epoxies, or resins can be used to create the bond 14 between the substrate 12 and the foil 16.

A first terminal 18A and a second terminal 18B are operatively connected to the foil 16. These terminals 18A and 18B can be presoldered or bumped to facilitate lead attachment to the strain gage 20.

Also shown in Figure 1 is an anti-static layer 20. The anti-static layer 20 can be either on the surface of the foil 16 or on the opposite side or on both sides. The anti-static layer 20 provides the advantage of easing the sorting as vibrating bowls can be used in the manufacturing process. The anti-static layer 20 prevents individual strain gages 10 from sticking together in the manufacturing process.

The anti-static layer is preferably copper or solder or other low resistance metal. A metal layer can be used to solder the strain gage 10 to a metal part or other surface 24 instead of using an adhesive such as glue. This can simplify the installation process of the strain gage of the present invention.

Figure 2 provides a top view of one embodiment of a strain gage of the present invention. In Figure 2, the foil 16 has a serpentine pattern 22, although the present invention fully contemplates that other types of patterns can be used in order to arrive at a desired resistance. Preferably the foil pattern 22 provides a resistance of between 50 ohms and 10,000 ohms. The strain factor k that results from the strain gage 10 is essentially the same as if the foil were attached to a very flexible backing of 0.5 mils. Thus, the k is normally about 2.

An improved strain gage has now been disclosed. The present invention contemplates variations in the type and thickness of the semi-rigid substrate, the type of foil, the resistance of the foil, the type of cement or other bonding agent used to attach the foil, the type of material used for the anti-static layer, and the method to attach the improved strain gage to the structure (adhesively bonded, soldered, etc.).

**Claims**

1. A strain gage comprising: a semi-rigid substrate (12) having a thickness of about 1 mil (25 μm) to about 30 mils (762 μm) adapting the strain gage for packaging in tape and reel; a resistive strain sensitive foil (16) bonded to the semi-rigid substrate (12) for providing a resistance varying with strain associated with a surface to which the strain gage is attached; a first and a second terminal (18A,18B) operatively connected to the resistive strain sensitive foil; and an anti-static layer (20) overlaying a surface of the resistive strain sensitive foil for adapting the strain gage for sorting with vibrating bowls.

2. The strain gage of claim 1 wherein the resistive strain sensitive foil provides a resistance of between about 50 and about 10,000 ohms.

3. The strain gage of claim 1 wherein the anti-static layer is adapted for soldering the strain gage to a metal part.

4. The strain gage of claim 1 wherein the anti-static layer overlays a surface of the semi-rigid substrate opposite the resistive strain sensitive foiL

5. The strain gage of claim 4 wherein the anti-static layer is adapted for soldering the strain gage to a metal part.

6. The strain gage of claim 1 wherein the semi-rigid substrate is glass reinforced epoxy.

7. The strain gage of claim 1 wherein the semi-rigid substrate is polyimide.

8. The strain gage of claim 1 wherein the semi-rigid substrate is phenolic.

9. The strain gage of claim 1 wherein the first and second terminals are presoldered for facilitating lead attachment.

10. The strain gage of claim 1 having a k of about 2.

11. A method for manufacturing a strain gage, comprising: bonding a resistive strain sensitive foil (16) to a semi-rigid substrate (12) to adapt the strain gage for packaging in tape and reel, the resistive strain sensitive foil and semi-rigid substrate selected to provide a strain factor of about 2; attaching a first and second terminal to the resistive strain sensitive foil; and attaching an anti-static layer (20) to a surface of the resistive strain sensitive foil.

12. The method of claim 12 wherein a thickness of the semi-rigid substrate is about 1 mil (25 μm) to about

30 mils (762 μm).

13. The method of claim 12 wherein the anti-static layer is metal.

14. The method of claim 12 further comprising packaging the strain gage on a tape.

15. The method of claim 12 further comprising sorting the strain gage using a vibrating bowl.

**Patentansprüche**

1. Dehnungsmeßstreifen
mit einem halbsteifen Substrat (12), das eine Dicke von etwa 25 μm (1 mil) bis 762 μm (30 mils) hat und zur Verpackung des Dehnungsmeßstreifens in einem Trägerstreifen und einer Rolle ausgebildet ist; mit einer dehnungsempfindlichen Widerstandsfolie (16), die auf das halbsteife Substrat (12) geklebt ist, um einen Widerstand zu bilden, der sich mit der Dehnung der Oberfläche ändert, an der der Dehnungsmeßstreifen befestigt ist; mit einem ersten und einem zweiten Anschluß (18A, 18B), die mit der dehnungsempfindlichen Widerstandsfolie wirksam verbunden sind; und mit einer antistatischen Schicht (20), die die dehnungsempfindliche Widerstandsfolie überdeckt, um den Dehnungsmeßstreifen zum Sortieren in einer Vibrationsschüssel geeignet zu machen.

2. Dehnungsmeßstreifen nach Anspruch 1, **dadurch gekennzeichnet, dass** die dehnungsempfindliche Widerstandsfolie einen Widerstandswert von etwa 50 bis etwa 10.000 Ohm hat.

3. Dehnungsmeßstreifen nach Anspruch 1, **dadurch gekennzeichnet, dass** die antistatische Schicht zum Auflöten des Dehnungsmeßstreifens auf ein Metallteil vorbereitet ist.

4. Dehnungsmeßstreifen nach Anspruch 1, **dadurch gekennzeichnet, dass** die antistatische Schicht eine Oberfläche überdeckt, die auf der der dehnungsempfindlichen Widerstandsfolie entgegen gesetzten Seite auf dem halbsteifen Substrat liegt.

5. Dehnungsmeßstreifen nach Anspruch 4, **dadurch gekennzeichnet, dass** die antistatische Schicht zum Auflöten des Dehnungsmeßstreifens auf ein Metallteil vorbereitet ist.

6. Dehnungsmeßstreifen nach Anspruch 1, **dadurch gekennzeichnet, dass** das halbsteife Substrat mit Glassfaser verstärktes Epoxidharz ist.

7. Dehnungsmeßstreifen nach Anspruch 1, **dadurch gekennzeichnet, dass** das halbsteife Substrat aus Polyimid besteht.

8. Dehnungsmeßstreifen nach Anspruch 1, **dadurch gekennzeichnet, dass** das halbsteife Substrat aus Phenolharz besteht.

9. Dehnungsmeßstreifen nach Anspruch 1, **dadurch gekennzeichnet, dass** der erste und der zweite Anschluß vorgelötet sind, um eine Befestigung von Anschlußdrähten zu erleichtern.

10. Dehnungsmeßstreifen nach Anspruch 1, **dadurch gekennzeichnet, dass** es einen Wert k von etwa 2 hat.

11. Verfahren zur Herstellung eines Dehnungsmeßstreifenes mit den Verfahrensschritten:

Aufkleben einer dehnungsempfindlichen Widerstandsfolie (16) auf ein halbsteifes Substrat (12), um den Dehnungsmeßstreifen zum Verpacken in einem Trägerstreifen und einer Rolle auszubilden, wobei die dehnungsempfindliche Widerstandsfolie und das halbsteife Substrat so ausgewählt sind, dass sie einen Dehnungsfaktor von etwa 2 bilden;
Anbringen eines ersten und eines zweiten Anschlusses an der dehnungsempfindlichen Widerstandsfolie; und
Aufbringen einer antistatischen Schicht (20) auf die Oberfläche der dehnungsempfindlichen Widerstandsfolie.

12. Verfahren nach Anspruch 11, **dadurch gekennzeichnet, dass** die Dicke des halbsteifen Substrats etwa 25 μm (1 mil) bis 762 μm (30 mils) beträgt.

13. Verfahren nach Anspruch 12, **dadurch gekennzeichnet, dass** die antistatische Schicht aus Metall besteht.

14. Verfahren nach Anspruch 12, **dadurch gekennzeichnet, dass** der Dehnungsmeßstreifen zur Verpackung auf einem Streifen angeordnet wird.

15. Verfahren nach Anspruch 12, **dadurch gekennzeichnet, dass** der Dehnungsmeßstreifen mit einer Vibrationsschüssel sortiert wird.

**Revendications**

1. Jauge de contrainte comprenant: un substrat semi-rigide (12), ayant une épaisseur d'environ 25 μm (1 mil) à environ 762 μm (30 mils) adaptant la jauge de contrainte pour permettre son emballage dans du ruban et de la bobine ; une feuille résistive sensible à la contrainte (16) collée au substrat semi-rigide (12) pour fournir une résistance qui varie avec la contrainte associée à une surface à laquelle la jauge de contrainte est fixée ; une première et une seconde bornes (18A, 18B) connectées de manière opérationnelle à la feuille résistive sensible à la contrainte ; et une couche antistatique (20) recouvrant une surface de la feuille résistive sensible à la contrainte pour adapter la jauge de contrainte au triage par bol vibrant.

2. Jauge de contrainte de la revendication 1, dans laquelle la feuille résistive sensible à la contrainte fournit une résistance comprise entre environ 50 et environ 10 000 ohms.

3. Jauge de contrainte de la revendication 1, dans laquelle la couche antistatique est adaptée pour souder la jauge de contrainte à une pièce métallique.

4. Jauge de contrainte de la revendication 1, dans laquelle la couche antistatique recouvre une surface du substrat semi-rigide opposée à la feuille résistive sensible à la contrainte.

5. Jauge de contrainte de la revendication 4, dans laquelle la couche antistatique est adaptée pour souder la jauge de contrainte à une pièce métallique.

6. Jauge de contrainte de la revendication 1, dans laquelle le substrat semi-rigide est de l'époxy renforcé de fibres de verre.

7. Jauge de contrainte de la revendication 1, dans laquelle le substrat semi-rigide est du polyimide.

8. Jauge de contrainte de la revendication 1, dans laquelle le substrat semi-rigide est phénolique.

9. Jauge de contrainte de la revendication 1, dans laquelle la première et la seconde bornes sont présoudées pour faciliter la fixation du fil.

10. Jauge de contrainte de la revendication 1, ayant un facteur k d'environ 2.

11. Procédé de fabrication d'une jauge de contrainte comprenant : le collage d'une feuille résistive sensible à la contrainte (16) à un substrat semi-rigide (12) pour adapter la jauge de contrainte pour permettre son emballage dans du ruban et de la bobine, la feuille résistive sensible à la contrainte et le substrat semi-rigide étant sélectionnés pour fournir un facteur de contrainte d'environ 2 ; la fixation d'une première et d'une seconde bornes à la feuille résistive sensible à la contrainte ; et la fixation d'une couche antistatique (20) à une surface de la feuille résistive sensible à la contrainte.

12. Procédé de la revendication 12, selon lequel l'épaisseur du substrat semi-rigide est d'environ 25 $\mu$m (1 mil) à environ 762 $\mu$m (30 mils).

13. Procédé de la revendication 12, selon lequel la couche antistatique est métallique.

14. Procédé de la revendication 12, comprenant en outre l'emballage de la jauge de contrainte sur un ruban.

15. Procédé de la revendication 12, comprenant en outre le triage de la jauge de contrainte en utilisant un bol vibrant.

*Fig. 1*

*Fig. 2*